(19) Europäisches Patentamt
European Patent Office
Office européen des brevets

(11) **EP 4 715 679 A1**

(12) **EUROPEAN PATENT APPLICATION**

(43) Date of publication:
**25.03.2026 Bulletin 2026/13**

(21) Application number: 24202250.7

(22) Date of filing: **24.09.2024**

(51) International Patent Classification (IPC):
**G06N 3/098** (2023.01)    **G06N 3/0475** (2023.01)

(52) Cooperative Patent Classification (CPC):
**G06N 3/045; G06N 3/0475; G06N 3/098**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Aktiengesellschaft
80333 München (DE)**

(72) Inventors:
• **Chen, Haokun
81549 München (DE)**
• **Krompaß, Denis
85591 Vaterstetten (DE)**

(74) Representative: **Siemens Patent Attorneys
Postfach 22 16 34
80506 München (DE)**

(54) **MACHINE LEARNING ALGORITHM FOR OPTIMIZING A CLASSIFICATION MODEL**

(57)    The invention relates to a machine learning algorithm for optimizing a classification model ($\phi$), the algorithm comprising:
- providing (S1) a plurality of private data sets, wherein each private data set is locally stored on an individual client (C1-CK),
- one-shot uploading (S2) of each private data set in the form of vectors from the client (C1-CK) to a server (SU),
- integrating (S3) the uploaded vectors into a pre-trained latent diffusion model (SD), and
- optimizing (S4) a classification model ($\phi$) based on the latent diffusion model (SD).

Fig. 1

**Description**

The present invention relates to a machine learning algorithm for optimizing a classification model. Moreover, the invention relates to a system for optimizing a classification model. Further, the invention relates to a computer program product comprising a program code for executing a machine learning algorithm for optimizing a classification model.

Machine learning models are widely used, for example in different industrial applications. Nowadays, in industrial manufacturing there exist a high diversity of manufacturing scenarios. For example, for the same process/application there exist different machine types from many manufacturers that can be used. The distribution of the data recorded from the different machines in different production sites can differ. Similarly, the wear of the tooling of the different machines as well as other production-related factors, e.g. changes in the manufacturing process, influence the distribution of the collected data. Such shifts in the data distributions typically lead to a degradation of the performance of data-driven approaches developed for a certain application, making it challenging to optimize a global machine learning model which could cope with different data distribution. In current systems, this problem may be addressed by collecting or generating synthetic data from the new distribution, e.g., the new manufacturing machine, and labeling it, before training a ML model (or finetuning an existing ML model) on it. By doing so, the capability of the model handling multiple feature distributions will be improved. However, for each new distribution, new synthetic data will need to be collected or generated.

Further, the data owners, e.g. customers, are unwilling to share their data in order to preserve data-privacy and know-how, and possibly prevent reverse engineering. This makes the application of most previous works in centralized domain generalization impossible, since they rely on having access to the original data from the different data domains, e.g. manufacturing machines. A current approach for this is Federated Learning (FL), which is a decentralized machine learning paradigm, in which multiple clients could collaboratively train neural networks without centralizing their local data. Specifically, only the model weights will be transmitted between server and clients. The optimized model weights will be averaged at a central server for the next communication round. By doing so, the central server does not directly access the training data of each client, which protect the client privacy. However, the information being available might not be sufficient as only the model weights will be transmitted and no data of a new distribution.

Further, when collecting data as described above, this may lead to costs and manual efforts as data in industrial applications may be hard to collect. This is also the case for the data preprocessing, e.g., data cleaning, and the post-processing, e.g. labelling and sanity checking. Therefore, different clients or customers may have only limited quantity of the local data and a method for augmenting the training data for deep learning model is necessary.

It should be noted that independent of the grammatical term usage, individuals with male, female or other gender identities are included within the term.

Thus, it is one object of the present invention to provide an improved approach for optimizing a machine learning model, in particular a classification model, which may be used in industrial applications, without the need to disclose all data from a client side and at the same time saving time and effort.

According to a first aspect, a machine learning algorithm for optimizing a classification model is provided. The algorithm comprises:

- providing a plurality of private data sets, wherein each private data set is locally stored on an individual client,
- one-shot uploading of each private data set in the form of vectors from the client to a server,
- integrating the uploaded vectors into a pre-trained latent diffusion model, and
- optimizing a classification model based on the latent diffusion model.

A client in this context may be any kind of entity being involved in an industrial application and contributing data to a server of the industrial application. For example, the client may be a machine or apparatus of an industrial application or may be the manufacturer of such a machine or apparatus. The private data sets may contain any data being used in the industrial application and may be for example any kind of image or graphic data but also be any other type of data.

As explained above, the data set may be locally stored on an individual client. In order to avoid a disclosure of all private data, the private data sets are uploaded to a server in the form of vectors. Thus, instead of uploading all private data, only necessary data are uploaded in the form of vectors, wherein the vectors include a portion of the private data being helpful for the optimization but without disclosure of every available data. Thus, the knowledge contained in the private data set owned by the clients is provided without accessing it in its raw form, thus preserving the data-privacy of the clients.

As the data is uploaded in a one-shot form, a connection between client(s) and server is only needed once for uploading the vectors. Thus, the connection between client(s) and servers may be reduced to a minimum, saving costs and further preserving the data-privacy of the clients.

On the server, the uploaded vectors are then integrated into a pre-trained latent diffusion model, which is then used for optimizing a classification model. A latent diffusion model represents a method to learn a model that can sample from a highly complex probability distribution. Such a latent diffusion model may particularly be used for image and graphic data. The latent diffusion model can be used both, to accelerate the development of in-house data-driven applications and as a product, e.g. deployed in an edge device.

As the uploaded vectors are integrated into the pre-trained latent diffusion model, the model may be further trained using the uploaded vectors, i.e., improving the latent diffusion model.

According to an embodiment, the algorithm further comprises transforming each private data set in latent vectors and concept vectors using multi-level alignment. That means that the algorithm provides on the client side an instance-level and a client-level assignment. Thus, instead of providing the raw private data, only vectors, in particular latent and concept vectors, are provided from the clients to the servers.

A latent vector in this context may represent a specific data point in the complex probability distribution of the latent diffusion model. A concept vector in this context may represent different concepts that will be incorporated in the textual guidance of the latent diffusion model.

According to a further embodiment, transforming each private data set into latent vectors comprises extracting a low-dimensional latent representation of the data of each private data set. Thus, as the dimension of the latent vectors is lower than the dimension of the original or raw data, less information is provided to the server. That means that a dimensionality reduction, i.e., a kind of data compression, is performed.

According to a further embodiment, he algorithm further comprises interpolating the low-dimensional latent representation with a further latent representation from the same class. This may be done to further enhance the privacy protection of the data, i.e., the clients. In particular, a set of latent vectors from a specific category may be interpolated with its permutation.

In addition, random noise may be introduced via forward diffusion. Thus, the algorithm may further comprise adding noise to the interpolated low-dimensional latent representation.

By adding random noise to the latent vectors, their privacy protection ability may be enhanced. Besides, the generation diversity of the latent diffusion model may be improved and thus the target model performance.

According to a further embodiment, transforming each private data set into concept vectors comprises randomly initializing domain concept vectors and category concept vectors. At the client-level, i.e., before the vectors are transferred to the server, domain and category concepts are introduced.

The domain concept vectors may comprise the client specific information, e.g., a specific production scenario or camera setup. The category concept vectors may provide information about the specific category that will need to be classified, e.g., a specific type of anomaly.

This may provide the advantage of having textual guidance based on the domain and category concept vectors instead of the need to finetune model weights as it was the case in former models.

According to a further embodiment, the algorithm further comprises substituting tokens in a textual template with the corresponding domain concept vectors (S) and category concept vectors (V) generating a textual prompt for the pre-trained latent diffusion model. This is done on the server side. In the domain and category concept, tokens are used having a token embedding dimension of a textual conditioning model which can be used in this algorithm. Tokens in the textual template of the textual conditioning model can now be substituted with the concept vectors corresponding to a specific category. For instance, this could result in a textual prompt like "A[S] style of a [V]". Following this, the textual conditioning model may encode this prompt, transforming the textual embeddings (now in the form of the vectors) into a representation for the denoising, i.e., for removing the noise added beforehand on the client side.

According to a further embodiment, integrating the uploaded vectors into the pre-trained latent diffusion model comprises generating synthetic images using the uploaded vectors. These synthetic images may then be used for optimizing the classification model.

Thus, the optimization may take place based on synthetic images being generated on the server side based on low-dimensional data provided by the clients.

In summary, the here described algorithm may apply a variant of the traditional Federated Learning, i.e., One-Shot Federated Learning (OSFL), which requires only one-shot of server-client communication. Moreover, in the described algorithm, only a feature embedding, i.e., some float vector with minima dimensions, instead of the original training data will be transmitted. Therefore, it further enhances the privacy protection described above.

The algorithm adapts a pretrained Stable Diffusion Model (SD) to augment the client local training data and address the data scarcity problem. However, the pretraining dataset of SD usually exhibits different feature distribution compared with the client local dataset. Therefore, the algorithm uses textual guidance for the SD generation process and tunes the only specific parts of the textual prompts to address the feature distribution shift.

As described above, existing methods or solutions usually requires an additional public dataset, which is not easy to acquire especially for industrial application. Some other methods need to add additional modules to the final model, which is also not applicable for different architectures. The herein provided algorithm solves this problem by finetuning only a specific generative model instruction, i.e., the textual prompt, to align the Stable Diffusion generative model to the client data distribution, which is more efficient and lead to better image generation quality.

The existing methods require transmitting training data or optimized model, which would leak the privacy of the local client. Besides, existing methods requires multiple server-client transmission, which would increase the possibility of being attacked. In contrast to that, the herein provided algorithm improves the data privacy by transmitting the data only for one time, and only some tiny float vectors are transmitted, which contains less information about the client local training data.

The existing methods address the problem of data scarcity by generating new data using pretrained models, which are ineffective since the generated data usually does not match the distribution of the training data of the client. In contrast to that, the herein described algorithm aligns the generative model with only minimal adaptation and achieves better generation quality.

It should be noted that the method steps as described above may be carried out in any suitable order and/or may be carried out at least partially at the same time.

According to a further aspect, a system for optimizing a classification model is provided. The system comprises a plurality of individual clients, each client providing at least one private data set locally stored on the client, a server, and a transmitting unit for one-shot uploading of each private data set in the form of vectors from the client to the server. Further, the server is configured to integrate the uploaded vectors into a pre-trained latent diffusion model, and to optimize a classification model based on the latent diffusion model.

The respective entity, e.g., the client, the server or the transmitting unit, may be implemented in hardware and/or in software. If said entity is implemented in hardware, it may be embodied as a device, e.g., as a computer or as a processor or as a part of a system, e.g., a computer system. If said entity is implemented in software, it may be embodied as a computer program product, as a function, as a routine, as a program code or as an executable object.

The embodiments and features described with reference to the method of the present invention apply mutatis mutandis to the system of the present invention.

According to a further aspect, the invention relates to a computer program product comprising a program code for executing the above-described monitoring method for optimizing a classification when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:

Fig. 1    shows a sequence of steps of a machine learning algorithm for optimizing a classification model;

Fig. 2    shows a schematic block diagram of a system for optimizing a classification model; and

Fig. 3    shows a schematic overview of the machine learning algorithm of Fig. 1.

In the Figures, like reference numerals designate like or functionally equivalent elements, unless otherwise indicated.

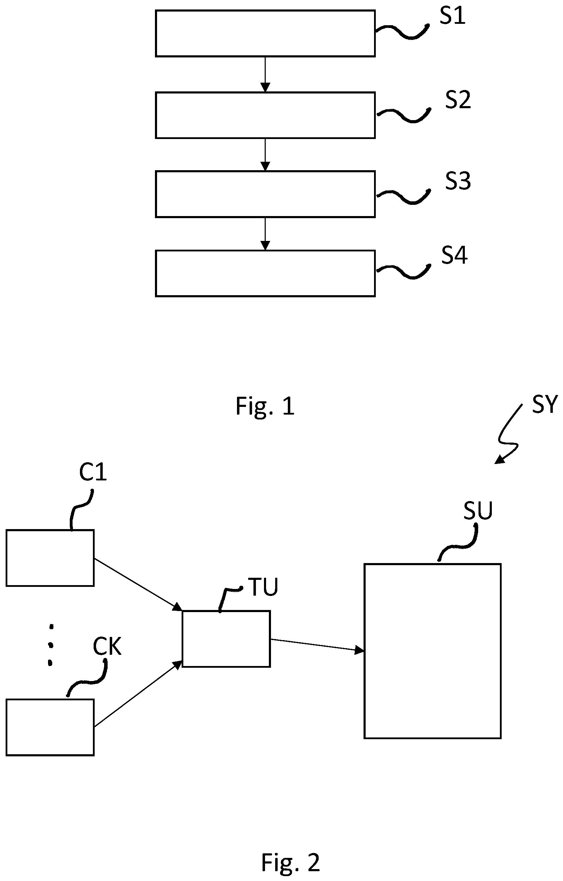

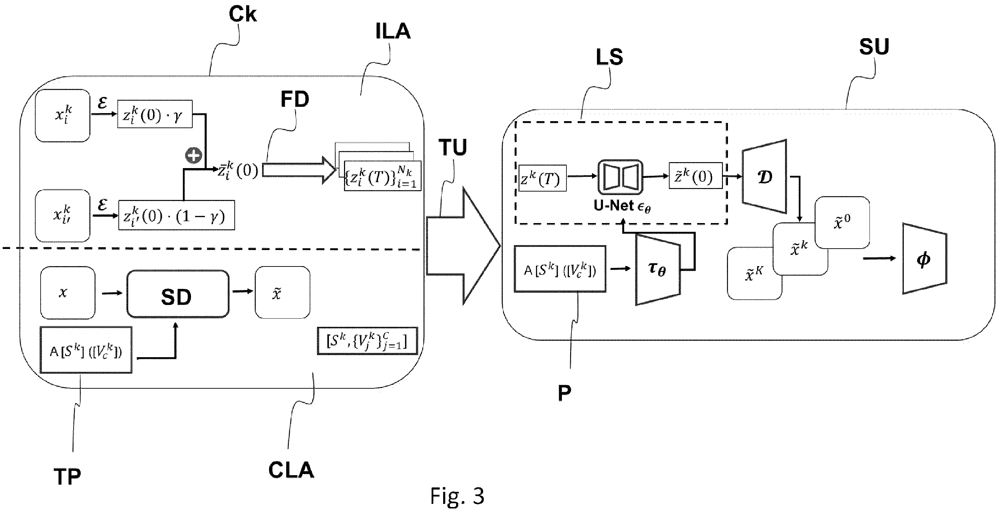

Fig. 1 shows a machine learning algorithm for optimizing a classification model ($\phi$ in Fig. 3).

In a first step S1, the algorithm provides a plurality of private data sets. Each of the private data set is locally stored on an individual client (C1-CK, Ck in Figs. 2 and 3).

In a second step S2, each private data set is uploaded in the form of vectors from the client C1-CK, Ck to a server SU (see Figs. 2 and 3). The uploading is done once, i.e., as a one-shot upload. This reduces the communication between clients C1-CK, Ck and Server SU. As the private data sets are not uploaded in raw format and in their entirety, but in a reduced form as vectors, the information and data being made available to the server SU is reduced, protecting the privacy of the clients C1-CK, Ck

In a third step S3, the uploaded vectors are integrated into a pre-trained latent diffusion model. Thus, the pre-trained latent diffusion model is further trained using the uploaded vectors, i.e., improving the latent diffusion model.

In a final step S4, a classification model $\phi$ is optimized based on the latent diffusion model.

Fig. 2 shows a corresponding system SY. The system SY comprises a plurality of clients C1-CK. It should be noted that the system SY may comprise any number of clients C1-CK.

From the clients C1-CK, the vectors as mentioned above are transmitted via a transmitting unit TU to the server SU. The server SU may be any kind of server and is particularly configured to perform an optimization of a classification model. The transmitting unit TU provides a communication path between the clients C1-CK and the server SU. This communication path may be wireless or may be wired.

With respect to Fig. 3, a possible implementation of the algorithm of Fig. 1 will be explained in further detail.

The algorithm adapts a specific type of diffusion model, namely Stable Diffusion (SD). The herein described algorithm, in the following also called FedMLA, addresses data heterogeneity problems in One-shot federated learning (OSFL). Specifically, the algorithm aligns the pretrained SD model at the server SU to generate high-quality training data that follow the data distribution of different clients (in Fig. 3, one client Ck is shown). During a client local optimization, all training data are projected into the low-dimensional latent space LS. To further enhance privacy protection, the set of latent vectors from a specific category with its permutation is interpolated and random noise is introduced via forward diffusion FD.

Subsequently, textual templates are adapted as the generation condition and specific tokens are replaced with optimizable vectors. By learning these vectors, stable diffusion SD is provided with better domain and category concept guidance from the local data of a specific client Ck. The latent vectors and the optimized concept vectors serve as instance-level and client-level alignment for stable diffusion SD, respectively, and are uploaded to the server SU. Finally, the synthetic images from the aligned stable diffusion SD are used to optimize the classification model $\phi$.

The goal of the algorithm is thus optimizing a C-way classification model $\phi$ utilizing the client local data, where C e N denotes the number of categories. It is assumed that there are CK e N clients joining the collaborative training.

Each client Ck owns its private dataset $D^k$ containing $N^k \in N$ (image, label) pairs: $\left\{ x_i^k, y_i^k \right\}_{i=1}^{k^k}$. Only one-shot data upload from the clients to the central server is allowed.

A schematic overview of the proposed algorithm is provided in Fig. 3.

First, the multi-level alignment is introduced in the local update of the kth client Ck, omitting the subscript k for simplicity in the following description.

(1) Instance-level Alignment ILA

While traditional Stable Diffusion (SD) employs a Gaussian distribution for the initial latent vector $z(T) \sim N(0,I)$, recent studies have demonstrated the advantages of using informative non-Gaussian $z(T)$ for better image quality. Therefore, the algorithm leverages the VAE encoder $\varepsilon$ from the pretrained SD to obtain the latent vector for each specific real sample $x_i$ from the local training set $D^k$. Hereby, no additional optimization is required, making the process computationally efficient. Specifically, the algorithm first extracts the low-dimensional latent representation $z_i(0) \leftarrow \varepsilon(x_i)$. To further enhance the client privacy, the algorithm interpolates $z_i(0)$ with another latent representation $z_{i'}(0)$ from the same class. Finally, the algorithm adds T-steps of random noise to obtain $z_i(T)$, which corresponds to the largest noise intensity in SD. The overall process can be formalized as

$$z_i(T) \leftarrow \delta\big(T, \gamma z_i(0) + (1 - \gamma)z_{i'}(0)\big), \quad \text{s.t., } i \neq i', y_i = y_{i'} \qquad (1)$$

where $\gamma \sim \mathcal{N}(0.5, 0.1^2)$ and truncated to [0, 1]. Finally, the algorithm stores $z_i(T)$ and its corresponding ground truth label $y_i$ for all training images in the kth client Ck as instance-level alignment.

(2) Client-level Alignment CLA

Applying only instance-level alignment may lead to reduced diversity in SD generation. Therefore, the algorithm executes further alignment at the client-level and incorporates domain and category concepts in the SD generation process. To avoid the costly finetuning of the SD model weights, the algorithm finetunes only the textual guidance.

Specifically, the algorithm randomly initializes the domain concept vector $S \in \mathbb{R}^{n_s \times d_u}$ and category concept vector $V \in \mathbb{R}^{C \times n_v \times d_w}$, where $n_s$ and $n_v$ are the number of tokens for the domain concept and category concept vectors, respectively, and $d_w$ is the token embedding dimension of the textual conditioning model $\tau_\theta$.

Subsequently, specific tokens in the textual template TP are substituted with the concept vectors S and $V_y$ corresponding to a specific category y

For instance, on the server side, this could result in textual prompt P like "A[S] style of a [$V_y$]" for a DomainNet dataset. Following this, $\tau_\theta$ encodes these modified prompts, transforming the textual embeddings into intermediate representation for the denoising UNet $\varepsilon_\theta$.

To jointly optimize both concept vectors S and $V_y$, the algorithm adopts the following objective function:

$$L_g = E_{\mathbb{E}(x(0)), y, \epsilon \sim \mathbb{N}(0,1), t} \left[ |\epsilon - \epsilon_\theta \big( z(t), t, \tau_\theta(S, V_y) \big) |_2^2 \right] (2)$$

where timestep t is sampled from Uniform({1, ..., T}).

After each client C1-CK finishes its local optimization, the latent vectors $\left\{ z_i(T), y_i \right\}_{i=1}^{N^k}$, along with the optimized concept vectors S, V, are uploaded to the server SU. To further increase the generation diversity, a small perturbation may be introduced to the domain concept vector S. Specifically, the algorithm defines $\hat{S} = S + \eta$ with $\eta \sim \mathcal{N}(0, \sigma_n)$, where $\sigma_n$ controls the perturbation intensity. The server SU then integrates these vectors into the same pretrained SD model and generates synthetic images with

$$\widetilde{x}_i = \mathcal{D}\left(\epsilon_\theta\left(z_i(T), T, \tau_\theta\left(\hat{S}, V_{y_i}\right)\right)\right) \quad (3)$$

The data sample $(\widetilde{x}_i, y_i)$ is appended to the synthetic set $D_{syn}$.

The described algorithm may perform image generation asynchronously, eliminating the need to wait for all clients to complete their local processes. Once the server SU receives the vectors uploaded from all clients and completes the image generation, the algorithm proceeds to optimize the classification model $\phi$ with the following objective:

$$L_{cls} = L_{CE}(\phi(\tilde{x}), y) \quad (4)$$

In the following, an example of the pseudo code of the algorithm is shown:

ServerUpdate

1:  Initialize Stable Diffusion with pretrained weights θ, classification model $\phi$, synthetic dataset $D_{syn} \leftarrow \emptyset$.

2:  for client k=1 to K do (in parallel)

3:  kth client execute ClientUpdate(k) and upload $\{z_i^k(T), y_i^k\}_{i=1}^{N_k}, \{V_j^k\}_{j=1}^{C}, S^k$

4:  for i=1 to $N_k$ do

5:  $e \leftarrow \tau_\theta("A[S^k]$ style of a $[V_{y_1^k}^k]")$

6:  $\tilde{z}(0) \leftarrow \epsilon_\theta(z_i^k(T), t, e)$

7:  $\tilde{x} \leftarrow \mathcal{D}(\tilde{z}(0))$

8:          $D_{syn}.\,append\left(\left[\tilde{x}, y_i^k\right]\right)$

9:          end for

10:     end for

11:     Optimize ϕ using $D_{syn}$ (Equation 4)

ClientUpdate(k)

1:     Initialize Stable Diffusion with pretrained weights θ

2:     Randomly initialize $\{V_j^k\}_{j=1}^C, S^k$

3:     for i=1 to $N^k$ do

4:          Randomly sample another image $x_{i\prime}^k$ with $y_i = y_{i\prime}$

5:          $\bar{z}(0) \leftarrow \gamma \mathcal{E}\left(x_i^k\right) + (1 - \gamma)\mathcal{E}(x_{i\prime}^k)$

6:          $z_i^k(T) \leftarrow \delta(T, \bar{z}(0))$

7:     end for

8:     for local step st=1 to $N_{step}$ do

9:          Sample one mini-batch $\{x_b^k, y_b^k\}$ from $D^k$, timestep t

10:         $e \leftarrow \tau(\{A[S^k] \text{ style of a } [V_{y_b^k}^k]"\})$

11:         Optimize $S^k, \{V_j^k\}_{j=1}^C$ (Equation 2)

12:     end for

Although the present invention has been described in accordance with preferred embodiments, it is obvious for the person skilled in the art that modifications are possible in all embodiments.

List of Reference

| | |
|---|---|
| C1-CK, Ck | client |
| CLA | client level alignment |
| FD | forward diffusion |
| ILA | instance level alignment |
| LS | latent space |
| P | prompt |
| SU | server |
| SD | stable diffusion |
| SY | system |
| TP | textual template |
| TU | transmitting unit |
| ϕ | classification model |
| S1-S4 | method steps |

**Claims**

1. A machine learning algorithm for optimizing a classification model (ϕ), the algorithm comprising:

- providing (S1) a plurality of private data sets, wherein each private data set is locally stored on an individual client (C1-CK),
- one-shot uploading (S2) of each private data set in the form of vectors from the client (C1-CK) to a server (SU),
- integrating (S3) the uploaded vectors into a pre-trained latent diffusion model (SD), and
- optimizing (S4) a classification model ($\phi$) based on the latent diffusion model (SD).

2. The machine learning algorithm according to claim 1, **characterized in that** the algorithm further comprises transforming each private data set in latent vectors and concept vectors using multi-level alignment.

3. The machine learning algorithm according to claim 2, **characterized in that** transforming each private data set into latent vectors comprises extracting a low-dimensional latent representation of the data of each private data set.

4. The machine learning algorithm according to claim 3, **characterized in that** the algorithm further comprises interpolating the low-dimensional latent representation with a further latent representation from the same class.

5. The machine learning algorithm according to claim 4, **characterized in that** the algorithm further comprises adding noise to the interpolated low-dimensional latent representation.

6. The machine learning algorithm according to any one of the claims 2 to 5, **characterized in that** transforming each private data set into concept vectors comprises randomly initializing domain concept vectors and category concept vectors.

7. The machine learning algorithm according to claim 6, **characterized in that** the algorithm further comprises substituting tokens in a textual template (TP) with the corresponding domain concept vectors and category concept vectors generating a textual prompt (P) for the pre-trained latent diffusion model (SD).

8. The machine learning algorithm according to any one of the preceding claims, **characterized in that** integrating the uploaded vectors into the pre-trained latent diffusion model (SD) comprises generating synthetic images using the uploaded vectors.

9. The machine learning algorithm according to claim 8, **characterized in that** the algorithm optimizes the classification model ($\phi$) using the synthetic images.

10. A system for optimizing a classification model ($\phi$), the system comprising:

    - a plurality of individual clients (C1-CK), each client (C1-CK) providing at least one private data set locally stored on the client (C1-CK),
    - a server (SU), and
    - a transmitting unit (TU) for one-shot uploading of each private data set in the form of vectors from the client (C1-CK) to the server (SU),

    wherein the server (SU) is configured to integrate the uploaded vectors into a pre-trained latent diffusion model (SD), and to optimize a classification model ($\phi$) based on the latent diffusion model (SD).

11. A computer program product comprising a program code for executing the method for optimizing a classification model ($\phi$) according to any one of the claims 1 to 9, when run on at least one computer.

S1

S2

S3

S4

Fig. 1

SY

C1

SU

TU

CK

Fig. 2

Fig. 3

| | Europäisches Patentamt European Patent Office Office européen des brevets | **EUROPEAN SEARCH REPORT** | **Application Number** EP 24 20 2250 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MINGZHAO YANG ET AL: "Exploring One-shot Semi-supervised Federated Learning with A Pre-trained Diffusion Model", ARXIV.ORG, CORNELL UNIVERSITY LIBRARY, 201 OLIN LIBRARY CORNELL UNIVERSITY ITHACA, NY 14853, 6 May 2023 (2023-05-06), XP091503770, * pages 1-8 * | 1-11 | INV. G06N3/098 G06N3/0475 |
| A | Shin Myungjae ET AL: "<mark>XOR Mixup</mark>: <mark>Privacy</mark>-<mark>Preserving Data Augmentation for One</mark>-<mark>Shot Federated Learning</mark>", arXiv.org, 9 June 2020 (2020-06-09), pages 1-8, XP093256933, Retrieved from the Internet: URL:https://arxiv.org/pdf/2006.05148 [retrieved on 2025-03-06] * pages 1-5 * | 1-11 | |

TECHNICAL FIELDS SEARCHED (IPC)

G06N

The present search report has been drawn up for all claims

| Place of search | Date of completion of the search | Examiner |
|---|---|---|
| The Hague | 6 March 2025 | Moran, Matthew |

EPO FORM 1503 03.82 (P04C01)